# EUROPÄISCHE PATENTSCHRIFT

(11) **EP 2 298 997 B1**
(45) Veröffentlichungstag und Bekanntmachung des Hinweises auf die Patenterteilung: **29.03.2017**
(21) Anmeldenummer: 10009201.4
(22) Anmeldetag: 04.09.2010
(51) Int. Cl.: E01C 23/088, B60Q 1/50

(54) **Selbstfahrende Straßenfräsmaschine**
Self-propelled road milling machine
Machine automobile à fraiser la chaussée

(30) Priorität: 18.09.2009 DE 102009041842
(43) Veröffentlichungstag der Anmeldung: 23.03.2011
(73) Patentinhaber: Wirtgen GmbH, 53578 Windhagen (DE)
(72) Erfinder: Berning, Christian, 53909 Zülpich (DE); Montermann, Armin, 56626 Andernach (DE); Cutler, Stefan, 53567 Buchholz (DE); Barimani, Cyrus, 53639 Königswinter (DE); Hähn, Günter, 53639 Königswinter (DE)
(74) Vertreter: Oppermann, Frank

(56) Entgegenhaltungen:
- EP-B1- 1 507 925
- US-A1- 2004 004 544

## Beschreibung

Die Erfindung betrifft eine selbstfahrende Straßenfräsmaschine nach dem Oberbegriff des Anspruchs 1 zum Bearbeiten von Bodenoberflächen, insbesondere Fahrbahnen.

Selbstfahrende Straßenfräsmaschinen sind schon lange bekannt. Sie verfügen über eine Fräseinrichtung, mit der von der Bodenoberfläche Material abgefräst wird, und eine Transporteinrichtung, mit der das abgefräste Material von der Fräseinrichtung zu einer Abwurfstelle gefördert wird. An der Abwurfstelle wird das Material von einem der Straßenfräsmaschine vorausfahrenden oder nachfolgenden Transportfahrzeug aufgenommen.

Die bekannten Straßenfräsmaschinen sind in der Lage, ein verhältnismäßig großes Volumen an Material in einer relativ kurzen Zeit abzufräsen, wobei das Förderband der Transporteinrichtung mit relativ hoher Fördergeschwindigkeit betrieben wird.

Bei dem Einsatz der Straßenfräsmaschinen stellt sich während der Fahrt das Problem, das an der Abwurfstelle von dem Förderband abgeworfene Material von dem Transportfahrzeug zeitgleich aufzunehmen. Dabei soll einerseits vermieden werden, dass das Material vor oder hinter sowie neben der Ladefläche des Transportfahrzeugs abgeworfen wird. Andererseits soll vermieden werden, dass das Transportfahrzeug überladen wird. Es wird angestrebt, dass das Material gleichmäßig über die gesamte Länge der Ladefläche abgeworfen wird.

Die Verladung des abgefrästen Materials auf dem Transportfahrzeug erweist sich insofern als schwierig, als zwar der Maschinenführer der Straßenfräsmaschine, nicht aber der Fahrzeugführer des Transportfahrzeugs den Ladevorgang beobachten kann. Seitdem Straßenfräsmaschinen bekannt sind, ist die übliche Praxis auf der Baustelle, dass der Maschinenführer der Straßenfräsmaschine um den Fahrzeugführer des Transportfahrzeugs zu dirigieren, in Ermangelung besserer Hilfsmittel, die Fahrzeughupe verwendet, die aber eigentlich einen anderen Zweck hat.

Bei einer sogenannten Frontlader-Straßenfräsmaschine, bei der sich das Förderband der Transporteinrichtung in Arbeitsrichtung nach vorne über den vorderen Teil des Maschinenrahmens erstreckt, fährt das Transportfahrzeug, beispielsweise ein Muldenkipper, der Straßenfräsmaschine voraus. Dabei ist die Geschwindigkeit des Transportfahrzeugs im Allgemeinen höher als die der Straßenfräsmaschine. Folglich wandert die Abwurfstelle oberhalb der Ladefläche des Transportfahrzeugs von vorne nach hinten. Dies kann der Maschinenführer der Straßenfräsmaschine beobachten. Wenn sich die Abwurfstelle am hinteren Ende der Ladefläche befindet, betätigt der Maschinenführer der Straßenfräsmaschine die Hupe, um den Fahrzeugführer des Transportfahrzeugs aufzufordern, das Transportfahrzeug zu stoppen. Da die Straßenfräsmaschine weiterfährt, wandert die Abwurfstelle zu dem vorderen Ende der Ladefläche. Wenn die Abwurfstelle das vordere Ende der Ladefläche erreicht hat, betätigt der Maschinenführer der Straßenfräsmaschine wieder die Hupe, um den Fahrzeugführer des Transportfahrzeugs zum Anfahren aufzufordern.

Die Aufforderung zum Anfahren und Stoppen des Transportfahrzeugs mit Hupsignalen hat sich in der Praxis grundsätzlich bewährt. Daher hat man an dieser üblichen Praxis bisher immer festhalten wollen. Diese Praxis hat verschiedene Nachteile, die aber nicht offensichtlich sind.

Zunächst können die Hupsignale zu Irritationen anderer Verkehrsteilnehmer führen, da die Fahrzeugführer der an der Baustelle vorbeifahrenden Fahrzeuge nicht wissen oder nicht erkennen können, dass es sich bei den Hupsignalen um Anweisungen an den Fahrzeugführer des Transportfahrzeugs handelt. Im Übrigen sind die Hupsignale mit Lärm verbunden, der nicht nur das Baustellenpersonal, sondern auch Anwohner in der Nähe der Baustelle insbesondere bei Nachtarbeit stört.

Andererseits kann auch der Fahrzeugführer des Transportfahrzeugs durch mögliche Hupsignale der vorbeifahrenden Fahrzeuge irritiert werden, was zu einem Zusammenstoß von Transportfahrzeug und Straßenfräsmaschine oder zum Abwurf des abgefrästen Materials hinter der Ladefläche des Transportfahrzeugs führen kann.

Die andauernd wiederkehrenden Hupsignale können aber auch dazu führen, dass das Baustellenpersonal nicht mehr zwischen einem Hupsignal, mit dem der Maschinenführer der Straßenfräsmaschine das Baustellenpersonal vor einer Gefahr warnen will, von einem Hupsignal als Anweisung für den Fahrzeugführer des Transportfahrzeugs unterscheiden kann. Folglich verliert das Hupsignal für das Baustellenpersonal seine eigentliche Zweckbestimmung.

Darüber hinaus erfordert die Erkennung der Hupsignale für den Fahrzeugführer des Transportfahrzeugs relativ große Aufmerksamkeit, da die Hupsignale auf der Baustelle überhört werden können. Wenn der Fahrzeugführer des Transportfahrzeugs das Hupsignal überhört, hat er im Nachhinein nicht die Möglichkeit, sich zu vergewissern, welche Anweisungen der Maschinenführer der Straßenfräsmaschine gegeben hat.

Die US 2004/0004544 A1 betrifft eine landwirtschaftliche Erntemaschine und ein Transportfahrzeug, wobei am Armaturenbrett der Erntemaschine eine Bedieneinheit und am Armaturenbrett des Transportfahrzeugs eine Empfangseinheit vorgesehen ist, so dass sich die jeweilige Einheit unmittelbar im Blickfeld des Fahrzeugführers des betreffenden Fahrzeugs befindet. Auf der Empfangseinheit werden dem Fahrzeugführer des Transportfahrzeugs Kommando-Signale angezeigt, die der Fahrzeugführer der Erntemaschine mit der Bedieneinheit vorgibt. Zwischen Bedien- und Empfangseinheit soll eine Funkverbindung aufgebaut werden, so dass beide Einheiten miteinander kommunizieren können. Hierbei stellt sich insbesondere das Problem, dass bei einer Mehrzahl von Erntemaschinen und Transportfahrzeugen eine Funkverbindung nur zwischen Fahrzeugen hergestellt werden soll, die nebeneinanderfahren, d. h. zu dem jeweiligen Verbund gehören.

Der Erfindung liegt die Aufgabe zugrunde, eine selbstfahrende Straßenfräsmaschine zu schaffen, mit der sich das abgefräste Material einfach und sicher auf der Ladefläche eines vorausfahrenden Transportfahrzeugs abladen lässt.

Die Lösung dieser Aufgabe erfolgt erfindungsgemäß mit den Merkmalen des Patentanspruchs 1. Die Unteransprüche betreffen vorteilhafte Ausführungsformen der Erfindung.

Die Erfinder haben auf der Baustelle erkannt, dass die seit langem geübte Praxis, mit Hupsignalen dem Fahrzeugführer des Transportfahrzeugs die erforderlichen Anweisungen zu geben, mit den oben genannten Nachteilen verbunden ist.

Die erfindungsgemäße Straßenfräsmaschine zeichnet sich durch eine Signaleinrichtung aus, die eine Bedieneinheit zur Eingabe von mindestens zwei unterschiedlichen Betriebszuständen durch den Maschinenführer der Straßenfräsmaschine und eine optische Anzeigeeinheit zur Anzeige der mindestens zwei mit der Bedieneinheit vom Maschinenführer der Straßenfräsmaschine vorgegebenen Betriebszustände für den Fahrzeugführer des Transportfahrzeugs umfasst. Die Signaleinrichtung kann auch mehrere Bedieneinheiten oder optische Anzeigeeinheiten umfassen. Mehrere Bedieneinheiten sind beispielsweise sinnvoll, wenn die Straßenfräsmaschine über mehrere Fahrstände verfügt. Mehrere Anzeigeeinheiten sind beispielsweise dann sinnvoll, wenn sie redundant angeordnet werden, z. B. paarweise angeordnet werden, um unter allen Betriebsbedingungen den freien Blick auf mindestens eine der Anzeigeeinheiten sicher zu stellen. Die optische Anzeigeeinheit kann an der Straßenfräsmaschine oder als selbstständige Einheit an dem Transportfahrzeug vorgesehen sein.

Unter dem ersten Betriebszustand wird die Aufforderung zum Bremsen bzw. Anhalten des Transportfahrzeugs und unter dem zweiten Betriebszustand die Aufforderung zum Anfahren bzw. Weiterfahren des Transportfahrzeugs verstanden. Entscheidend ist, dass die Anzeige der beiden Betriebszustände optisch ist. Die optische Aufforderung zum Bremsen und Anfahren kann andere Verkehrsteilnehmer und das Baustellenpersonal im Gegensatz zu den Hupsignalen nicht irritieren. Von Vorteil ist auch, dass die optische Anzeige für den Fahrzeugführer des Transportfahrzeugs immer präsent ist. Im Gegensatz zu den Hupsignalen kann die Aufforderung zum Bremsen und Anfahren nicht überhört werden. Selbst wenn der Fahrzeugführer des Transportfahrzeugs in dem Moment nicht aufmerksam ist, an dem der Maschinenführer der Straßenfräsmaschine das Signal gibt, kann der Fahrzeugführer des Transportfahrzeugs an dem bleibenden optischen Signal jederzeit erkennen, ob das Transportfahrzeug fahren oder stehen soll. Dabei bleibt die Signalwirkung der Hupe sowohl für die anderen Verkehrsteilnehmer als auch das Baustellenpersonal erhalten. Das optische Signal der Anzeigeeinheit ist auch dann wahrnehmbar, wenn der Fahrzeugführer des Transportfahrzeugs durch Umgebungslärm gestört wird. Weiterhin ist die optische Anzeige nicht mit einer Lärmbelästigung für das Baustellenpersonal oder die Anwohner verbunden.

Die optische Anzeigeeinheit kann unterschiedlich ausgebildet sein. Allein entscheidend ist, dass die Betriebszustände optisch angezeigt werden. Bei einer bevorzugten Ausführungsform werden zwei Betriebszustände angezeigt, wobei der erste Betriebszustand durch ein erstes Symbol und der zweite Betriebszustand durch ein zweites Symbol angezeigt wird, die voneinander verschieden sind. Es können unterschiedliche Symbole verwandt werden. Diese Symbole sollten aber nicht den Symbolen entsprechen, die auf Straßenschildern verwendet werden. Vorzugsweise wird die Aufforderung zum Bremsen bzw. Anhalten als Kreuz und zum Anfahren bzw. Fahren als Pfeil signalisiert. Beide Symbole können auch unterschiedliche Farben haben. Beispielsweise kann das Kreuz rot und der Pfeil grün angezeigt werden. Auch können die Symbole blinken oder über die Anzeigefläche laufen, um die Aufmerksamkeit des Fahrzeugführers weiter zu erhöhen.

Die Bedieneinheit ist vorzugsweise am Fahrstand der Straßenfräsmaschine angeordnet, an dem der Maschinenführer die Ladefläche des Transportfahrzeugs beobachten und die Bedieneinheit bedienen kann.

Die Bedieneinheit kann als Bedienelemente über ein oder mehrere Tasten oder Schalter verfügen, mit denen sich die beiden Betriebszustände vorgeben lassen.

Bei einer besonders bevorzugten Ausführungsform weist die Bedieneinheit nur ein Bedienelement auf, wodurch Fehlbedienungen vermieden werden können. Vorzugsweise ist das eine Bedienelement ein Taster, wobei die Bedieneinheit derart ausgebildet ist, dass nach Betätigung des Tasters der eine Betriebszustand solange angezeigt wird, bis der Taster erneut betätigt wird, wonach dann der andere Betriebszustand angezeigt wird. Folglich kann der Maschinenführer einfach durch Betätigung des Tasters zwischen den beiden Betriebszuständen umschalten, die jeweils dauerhaft mit der optischen Anzeigeeinheit angezeigt werden.

Es ist aber auch möglich, dass an der Bedieneinheit zwei Taster vorzusehen, wobei mit dem einen Taster der eine Betriebszustand und mit dem anderen Taster der andere Betriebszustand vorgeben wird. Dann ist die Bedieneinheit derart ausgebildet, dass nach der Betätigung des einen Tasters der eine Betriebszustand so lange angezeigt wird, bis der andere Taster betätigt wird, nach dessen Betätigung der andere Betriebszustand angezeigt wird.

Insbesondere wenn das Betriebselement als Taster ausgebildet ist, erweist sich vorteilhaft, wenn die vorgegebenen Betriebszustände dem Maschinenführer der Straßenfräsmaschine signalisiert werden. Dies kann beispielsweise durch optische Symbole auf der Bedieneinheit, oder auf der Rückseite der Anzeigeeinheit erfolgen. Es können beispielsweise Signallampen oder der gleichen vorgesehen sein.

Eine alternative Ausführungsform sieht anstelle eines oder zwei Taster als Bedienelement ein Schalter mit mindestens zwei Schaltstellungen vor, wobei mit der einen Schaltstellung der eine und mit der anderen Schaltstellung der andere Betriebszustand vorgegeben wird. Vorzugsweise hat der Schalter zwei rastende Schaltstellungen, so dass der Maschinenführer allein an der Stellung des Schalters die Vorgabe des einen oder anderen Betriebszustands sofort erkennen kann, ohne dass weiter optische Signale zur Darstellung des Betriebszustands erforderlich sind.

Bei der erfindungsgemäßen Frontlader-Straßenfräsmaschine, bei der sich das Förderband der Transporteinrichtung in Arbeitsrichtung nach vorne über den vorderen Teil des Maschinenrahmens erstreckt, weist die optische Anzeigeeinheit eine Anzeigefläche auf, die in Arbeitsrichtung der Fräsmaschine weist. Folglich kann der Fahrzeugführer des der Frontlader-Straßenfräsmaschine vorausfahrenden Transportfahrzeugs die Anzeigefläche der optischen Anzeigeeinheit im Rückspiegel erkennen.

Die optische Anzeigeeinheit mit der Anzeigefläche ist an der Straßenfräsmaschine vorteilhafterweise derart angeordnet, dass der Fahrzeugführer des Transportfahrzeugs die Anzeigefläche in dem linken und/ oder rechten Rückspiegel des Transportfahrzeugs erkennen kann. Die optische Anzeigeeinheit ist an einer oder beiden Längsseiten des Maschinenrahmens angeordnet. Die Anzeigeeinheit sollte auf der Höhe angeordnet sein, auf der sich der Rückspiegel des Transportfahrzeugs befindet.

Die bekannten Straßenfräsmaschinen weisen an einer oder beiden Längsseiten einen Rückspiegel auf. Eine besonders bevorzugte Ausführungsform sieht vor, dass die optische Anzeigeeinheit an der Rückseite des Rückspiegels der Straßenfräsmaschine angeordnet ist.

Diese Ausführungsform hat den Vorteil, dass die Anzeigeeinheit Bestandteil des Rückspiegels ist, der im Blickfeld des Fahrzeugführers des Transportfahrzeugs angeordnet ist. Ferner sind mit der Integration der Anzeigeeinheit in den Rückspiegel keine zusätzlichen Anbauteile an der Straßenfräsmaschine erforderlich, mit denen die Sicht des Fahrzeugführers behindert werden könnte.

Bei einer weiteren bevorzugten Ausführungsform wird die Signalwirkung der optischen Anzeigeeinheit noch dadurch weiter erhöht, dass beim Wechsel der Anzeige von dem einen auf den anderen Betriebszustand zusätzlich ein akustisches Signal für den Fahrzeugführer des Transportfahrzeugs gegeben wird. Dies ist insbesondere bei der Ausführungsform von Vorteil, bei der die optische Anzeigeeinheit eine selbstständige Einheit bildet, die in der Fahrerkabine des Transportfahrzeugs angeordnet werden kann. In diesem Fall braucht das akustische Signal keine große Lautstärke haben, so dass es für andere nicht störend ist.

Im Folgenden werden mehrere Ausführungsbeispiele der Erfindung unter Bezugnahme auf die Zeichnungen näher erläutert.

Es zeigen:
- Fig. 1: Eine Straßenfräsmaschine zusammen mit einem Transportfahrzeug in vereinfachter Darstellung,
- Fig. 2 A: die optische Anzeigeeinheit in der Vorderansicht, wobei das Symbol zum Anhalten angezeigt wird,
- Fig. 2 B: die optische Anzeigeeinheit, wobei das Symbol zum Anfahren angezeigt wird,
- Fig. 2C: die optische Anzeigeeinheit in der Rückansicht,
- Fig. 2D: die optische Anzeigeeinheit in der Seitenansicht,
- Fig. 3: ein erstes Ausführungsbeispiel der Bedieneinheit,
- Fig. 4: ein zweites Ausführungsbeispiel der Bedieneinheit, und
- Fig. 5 und Fig. 6: weitere Ausführungsbeispiele der Bedieneinheit bzw. Anzeigeeinheit, die aber nicht Gegenstand der Erfindung sind.

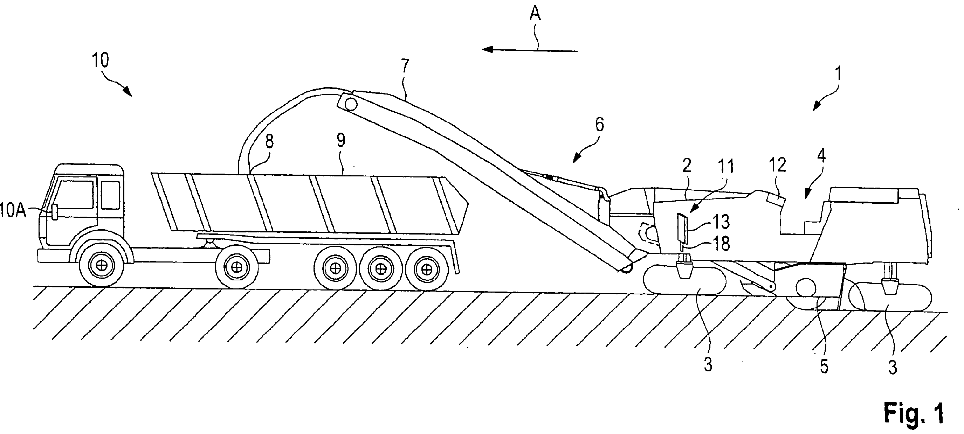

Fig. 1 zeigt in vereinfachter schematischer Darstellung eine Straßenfräsmaschine, bei der es sich um eine Frontlader-Straßenfräsmaschine handelt. Die Straßenfräsmaschine 1. weist einen Maschinenrahmen 2 und ein Fahrwerk 3 auf. Zwischen dem vorderen und rückwärtigen Teil des Maschinerahmens 2 befindet sich der Fahrstand 4. Darüber hinaus weist die Straßenfräsmaschine eine an den Maschinenrahmen 2 angeordnete Fräseinrichtung 5 auf, mit der Material von der Straßenoberfläche abgefräst werden kann.

Das abgefräste Material wird mit einer Transporteinrichtung 6 auf ein der Straßenfräsmaschine vorausfahrendes Transportfahrzeug 10, beispielsweise ein Muldenkipper, verladen. Die Transporteinrichtung 6 weist ein Förderband 7 auf, dass sich über den vorderen Teil des Maschinenrahmens 2 in Arbeitsrichtung A nach vorne erstreckt. Das mit relativ hoher Geschwindigkeit geförderte Material wird in Arbeitsrichtung A vor dem vorderen Ende des Förderbands 7 an der Abwurfstelle 8 oberhalb der Ladefläche 9 des Transportfahrzeugs 10 abgeworfen.

Das Transportfahrzeug 10 wird wie folgt beladen. Das Transportfahrzeug 10 fährt mit etwas höherer Geschwindigkeit als die Straßenfräsmaschine 1, so dass die Abwurfstelle 8 von dem vorderen zu dem hinteren Ende der Ladefläche 9 wandert. Dann stoppt das Transportfahrzeug 10, während die Straßenfräsmaschine 1 weiterfährt. Folglich wandert die Abwurfstelle 8 wieder zu dem vorderen Ende der Ladefläche 9. Dieser Vorgang wird solange wiederholt, bis das Transportfahrzeug vollständig beladen ist.

Die Straßenfräsmaschine 1 verfügt über eine Einrichtung, die dem Fahrzeugführer des Transportfahrzeugs 10 signalisiert, wann er das Transportfahrzeug anfahren oder anhalten soll. Diese Einrichtung wird nachfolgend im Einzelnen beschrieben.

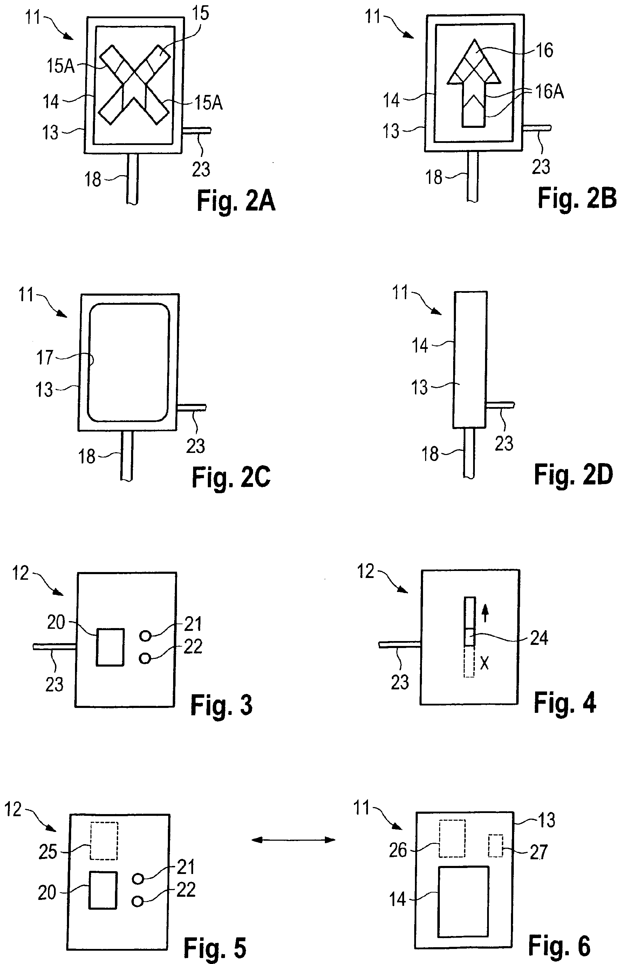

Die Signaleinrichtung umfasst eine optische Anzeigeeinheit 11 und eine Bedieneinheit 12. Bei dem ersten Ausführungsbeispiel sind die optische Anzeigeeinheit 11 und der Rückspiegel der Straßenfräsmaschine in einem gemeinsamen Gehäuse angeordnet, so dass sie eine Einheit bilden, die bei dem vorliegenden Ausführungsbeispiel an der in Arbeitsrichtung A linken Seite des Maschinenrahmens 2 nach außen vorstehend befestigt ist. In Fig. 1 ist optische Anzeigeeinheit 11 nur andeutungsweise dargestellt. Die Fig. 2A-2D zeigen die optische Anzeigeeinheit 11 in der Vorder-, Rück- und Seitenansicht.

Die optische Anzeigeeinheit 11 weist ein Gehäuse 13 mit einer Anzeigefläche 14 auf, die in Arbeitsrichtung A nach vorne weist, so dass sie im Blickfeld des Rückspiegels 10A des Fahrzeugführers des Transportfahrzeugs 10 liegt.

Bei dem vorliegenden Ausführungsbeispiel werden auf der optischen Anzeigeeinheit 11 wechselweise zwei Symbole angezeigt, die mit der Bedieneinheit 12 vom Maschinenführer der Straßenfräsmaschine 1 vorgegeben werden. Das erste Symbol, mit dem der Fahrzeugführer zum Bremsen bzw. Anhalten aufgefordert wird, ist ein Kreuz 15 (Fig. 2A), während das zweite Symbol, mit dem der Fahrzeugführer zum Anfahren bzw. Weiterfahren aufgefordert wird, ein Pfeil 16 ist (Fig. 2B). Vorzugsweise haben das Kreuz 15 und der Pfeil 16 unterschiedliche Farben, insbesondere ist das Kreuz rot und der Pfeil grün. Das rote Kreuz und der grüne Pfeil setzen sich aus mehreren Leuchtsegmenten 15A, 16A zusammen, die mit einer nicht dargestellten grünen bzw. roten LED von hinten beleuchtet sind. Die einzelnen Leuchtsegmente werden derart angesteuert, dass entweder ein rotes Kreuz 15 oder ein grüner Pfeil 16 angezeigt wird.

Fig. 2C zeigt die Rückseite des Gehäuses 13 der optischen Anzeigeeinheit 11, an der sich der verstellbare Rückspiegel 17 der Straßenfräsmaschine 1 befindet. Das Gehäuse 13 der optischen Anzeigeeinheit 11 ist an einem Bügel 18 an dem Maschinenrahmen 2 befestigt (Fig. 2D).

Fig. 3 zeigt die Bedieneinheit 12, die am Fahrstand 4 im Bedienfeld des Fahrzeugführers der Straßenfräsmaschine 1 angeordnet ist. Die Bedieneinheit 12 weist einen Taster 20 und zwei Signallampen 21, 22, insbesondere rote bzw. grüne LEDs, sowie eine nicht dargestellte elektrische Schaltung auf. Bedieneinheit 12 und optische Anzeigeeinheit 11 kommunizieren über eine elektrische Leitung 23. Die elektrische Schaltung ist derart ausgebildet, dass nach Betätigung des Tasters 20 das rote Kreuz 15 (Fig. 2A) auf der Anzeigefläche 14 der optischen Anzeigeeinheit 11 solange angezeigt wird, bis der Taster 20 wieder betätigt wird, wonach dann der grüne Pfeil 16 (Fig. 2B) angezeigt wird. Nach erneutem Betätigen des Tasters 20 wird dann wieder das rote Kreuz angezeigt (Fig. 2A) usw. Somit kann der Maschinenführer der Straßenfräsmaschine 1 dem Fahrzeugführer des Transportfahrzeugs 10 allein durch Betätigung des Tasters 20 die erforderlichen Anweisungen geben. Über den jeweiligen Betriebszustand ist der Maschinenführer informiert, da bei der Anzeige des roten Kreuzes die rote LED 21 und bei der Anzeige des grünen Pfeils die grüne LED 22 leuchtet.

Fig. 4 zeigt eine alternative Ausführungsform der Bedieneinheit 12, die sich von der unter Bezugnahme auf Fig. 3 beschriebenen Bedieneinheit dadurch unterscheidet, dass anstelle des Tasters 20 ein Schalter 24 vorgesehen ist, der zwei rastende Schaltstellungen aufweist. In Fig. 4 ist die erste Schaltstellung in durchgezogenen und die zweite Schaltstellung des Schalters 24 in gestrichelten Linien dargestellt. Wenn sich der Schalter 24 in der ersten Schaltstellung befindet, wird das rote Kreuz (Fig. 2A) angezeigt, während der grüne Pfeil (Fig. 2B) angezeigt wird, wenn sich der Schalter in der zweiten Schaltstellung befindet. Somit kann der Maschinenführer allein an der Stellung des Schalters erkennen, welche Anweisungen er dem Fahrzeugführer des Transportfahrzeugs gibt. Signallampen können hier entfallen.

Bei den oben beschriebenen Ausführungsbeispielen ist die optische Anzeigeeinheit 11 Bestandteil der Straßenfräsmaschine 1. Bei einer alternativen Ausführungsform, die aber nicht Gegenstand der Erfindung ist, bildet die optische Anzeigeeinheit aber eine selbstständige Einheit, die in oder an dem Transportfahrzeug 10 angeordnet wird. Beispielsweise kann die optische Anzeigeeinheit dem Fahrzeugführer des Transportfahrzeugs übergeben und von diesem in der Fahrzeugkabine angeordnet werden. Die Anzeigeeinheit kann aber auch fest in der Fahrzeugkabine montiert sein, beispielsweise als sogenanntes Head-Up-Display ausgebildet sein. Die Kommunikation zwischen der Bedieneinheit 12 und der optischen Anzeigeeinheit 11 erfolgt bei diesem Ausführungsbeispiel nicht über eine elektrische Leitung, sondern eine Funkverbindung. Daher weist die Bedieneinheit 12 eine nur andeutungsweise dargestellte Sendeeinheit 25 und die optische Anzeigeeinheit 11 eine nur andeutungsweise dargestellte Empfangseinheit 26 auf. Die Sendeeinheit 25 sendet ein Funksignal, das entweder den einen oder anderen Betriebszustand angibt, welches die Empfangseinheit 26 empfängt, so dass der eine oder andere Betriebszustand auf der Anzeigefläche 14 angezeigt wird. Ansonsten entspricht diese Ausführungsform den oben beschriebenen Ausführungsbeispielen, wobei auch die einander entsprechenden Teile mit den gleichen Bezugszeichen versehen sind.

Die Anzeigeeinheit 11 verfügt neben der Anzeigefläche 14 noch über einen akustischen Signalgeber 27, der sich in dem Gehäuse 13 der Anzeigeeinheit befindet. Der akustische Signalgeber 27 gibt bei jedem Wechsel der optischen Anzeige von dem einen auf den anderen Betriebszustand, d.h. Anhalten und Fahren, ein akustisches Signal, das der Fahrzeugführer des Transportfahrzeugs in der Fahrerkabine deutlich wahrnehmen kann, das Baustellenpersonal oder die übrigen Verkehrsteilnehmer aber nicht stört.

## Patentansprüche

1. Selbstfahrende Straßenfräsmaschine, mit
einem Maschinenrahmen (2),
einem an dem Maschinenrahmen angeordneten Fahrstand (4) für den Maschinenführer der Straßenfräsmaschine,
einer Fräseinrichtung (5) zum Abfräsen von Material,
einer Transporteinrichtung (7) zum Fördern des abgefrästen Materials zu einer Abwurfstelle, an der das abgefräste Material von einem der Straßenfräsmaschine vorausfahrenden Transportfahrzeug aufgenommen wird,
wobei die Straßenfräsmaschine eine Frontlader-Straßenfräsmaschine ist, bei der die Transporteinrichtung (7) in Arbeitsrichtung (A) sich nach vorne über den vorderen Teil des Maschinenrahmens (2) erstreckt,
**dadurch gekennzeichnet, dass**
die Straßenfräsmaschine mindestens eine Bedieneinheit (12) zur Eingabe von mindestens zwei unterschiedlichen Betriebszuständen durch den Maschinenführer der Straßenfräsmaschine aufweist, wobei mindestens eine optische Anzeigeeinheit (11) zur Anzeige der mindestens zwei mit der Bedieneinheit vom Maschinenführer der Straßenfräsmaschine vorgegebenen Betriebszustände für den Fahrzeugführer des der Straßenfräsmaschine vorausfahrenden Transportfahrzeugs vorgesehen ist,
wobei die optische Anzeigeeinheit (11) auf mindestens einer der beiden Längsseiten des Maschinenrahmens (2) der Straßenfräsmaschine angeordnet ist und eine in Arbeitsrichtung weisende Anzeigefläche (14) aufweist.

2. Straßenfräsmaschine nach Anspruch 1, **dadurch gekennzeichnet, dass** die optische Anzeigeeinheit (11) derart ausgebildet ist, dass für den ersten Betriebszustand ein erstes Symbol (15) und für den zweiten Betriebszustand ein zweites Symbol (16) angezeigt wird, wobei das erste Symbol von dem zweiten Symbol verschieden ist.

3. Straßenfräsmaschine nach Anspruch 1 oder 2, **dadurch gekennzeichnet, dass** die mindestens eine Bedieneinheit (12) am Fahrstand (4) angeordnet ist.

4. Straßenfräsmaschine nach einem der Ansprüche 1 bis 3, **dadurch gekennzeichnet, dass** die Bedieneinheit (12) ein Bedienelement (20, 24) aufweist, das als Bedienelement zur Vorgabe des ersten und zweiten Betriebszustands ausgebildet ist.

5. Straßenfräsmaschine nach Anspruch 4, **dadurch gekennzeichnet, dass** das Bedienelement ein Taster (20) ist, wobei die Bedieneinheit (12) derart ausgebildet ist, dass nach der Betätigung des Tasters der eine Betriebszustand auf der optischen Anzeigeeinheit (11) so lange angezeigt wird, bis der Taster erneut betätigt wird, wonach dann der andere Betriebszustand angezeigt wird.

6. Straßenfräsmaschine nach Anspruch 4, **dadurch gekennzeichnet, dass** das Bedienelement ein Schalter (24) mit mindestens zwei rastenden Schaltstellungen ist.

7. Straßenfräsmaschine nach einem der Ansprüche 1 bis 6, **dadurch gekennzeichnet, dass** die Straßenfräsmaschine mindestens einen an mindestens einer der beiden Längsseiten des Maschinenrahmens (2) angeordneten Rückspiegel (17) für den Maschinenführer aufweist, wobei der Rückspiegel und die optische Anzeigeeinheit (11) eine Einheit bilden.

8. Straßenfräsmaschine nach einem der Ansprüche 1 bis 7, **dadurch gekennzeichnet, dass** die optische Anzeigeeinheit (11) einen akustischen Signalgeber (27) aufweist, der derart ausgebildet ist, dass er bei einem Wechsel der Anzeige von dem einen auf den anderen Betriebszustand ein akustisches Signal gibt.

9. Straßenfräsmaschine nach einem der Ansprüche 1 bis 8, **dadurch gekennzeichnet, dass** die optische Anzeigeeinheit (11) derart ausgebildet ist, dass für den ersten Betriebszustand ein erstes Symbol (15) und für den zweiten Betriebszustand ein zweites Symbol (16) angezeigt wird, wobei das erste Symbol und das zweite Symbol in unterschiedlichen Farben dargestellt sind.

## Claims

1. Self-propelled road-milling machine, comprising
a chassis (2),
a driver's position (4) for the driver of the road-milling machine which is arranged on the chassis of the machine,
a milling arrangement (5) for milling off material,
a material-handling arrangement (7) for feeding the milled-off material to a discharge point at which the milled-off material is received by a transporting vehicle which drives ahead of the road-milling machine,
the road-milling machine being a front-unloading road-milling machine in which the material-handling arrangement (7) extends forward in the working direction (A) to a level higher than the front part of the chassis (2) of the machine,
**characterised in that**
the road-milling machine has at least one control unit (12) for the entry of at least two different states of operation by the driver of the road-milling machine, at least one visual indicator or display unit (11) being provided to indicate or display for the driver of the transporting vehicle the at least two states of operation which are preset with the control unit by the driver of the road-milling machine,
the visual indicator or display unit (11) is arranged on at least one of the two longitudinal sides of the chassis (2) of the machine and has an indicating or display surface (14) which faces in the direction of operation.

2. Road-milling machine according to claim 1, **characterised in that** the visual indicator or display unit (11) is so designed that a first symbol (15) is indicated or displayed for the first state of operation and a second symbol (16) is indicated or displayed for the second state of operation, the first symbol being different from the second symbol.

3. Road-milling machine according to claim 1 or 2, **characterised in that** the at least one control unit (12) is arranged at the driver's position (4).

4. Road-milling machine according to one of claims 1 to 3, **characterised in that** the control unit (12) has a control (20, 24) which takes the form of a control for presetting the first and second states of operation.

5. Road-milling machine according to claim 4, **characterised in that** the control is a push-button (20), the control unit (12) being so designed that, on the push-button being pressed, one state of operation is indicated or displayed on the visual indicator or display unit (11) until such time as the push-button is pressed again, following which the other state of operation is indicated or displayed.

6. Road-milling machine according to claim 4, **characterised in that** the control is a switch (24) having at least two switched positions in which it remains.

7. Road-milling machine according to one of claims 1 to 6, **characterised in that** the road-milling machine has at least one rear-view mirror (17) for the driver of the machine which is arranged on at least one of the two longitudinal sides of the chassis (2) of the machine, the rear-view mirror and the visual indicator or display unit (11) forming a unit.

8. Road-milling machine according to one of claims 1 to 7, **characterised in that** the visual indicator or display unit (11) has an audio signal emitter (27) which is so designed that it gives an audio signal when the indication or display changes from one state of operation to the other.

9. Road-milling machine according to one of claims 1 to 8, **characterised in that** the visual indicator or display unit (11) is so designed that a first symbol (15) is indicated or displayed for the first state of operation and a second symbol (16) is indicated or displayed for second state of operation, the first symbol and second symbol being shown in different colours.

## Revendications

1. Fraiseuse routière autopropulsée avec
un châssis (2),
un poste de conduite (4) disposé sur le châssis, pour le conducteur de la fraiseuse routière,
un dispositif de fraisage (5) pour le fraisage d'un matériau,
un dispositif de transport (7) pour le convoyage du matériau fraisé vers un point d'éjection, au niveau duquel le matériau fraisé est pris en charge par un véhicule de transport précédant la fraiseuse routière,
la fraiseuse routière étant une fraiseuse routière à chargement frontal, dans laquelle le dispositif de transport (7) s'étend dans la direction de travail (A) vers l'avant sur la partie avant du châssis (2),
**caractérisé en ce que**
la fraiseuse routière comprend au moins une unité de commande (12) pour la saisie d'au moins deux états de fonctionnement différents par le conducteur de la fraiseuse routière, au moins une unité d'affichage optique (11) étant prévue pour l'affichage d'au moins deux états de fonctionnement prédéterminés avec l'unité de commande par le conducteur de la fraiseuse routière, pour le conducteur du véhicule de transport précédant la fraiseuse routière,
l'unité d'affichage optique (11) étant disposée sur au moins un des deux côtés longitudinaux du châssis (2) de la fraiseuse routière et comprenant une surface d'affichage (14) orientée dans la direction de travail.

2. Fraiseuse routière selon la revendication 1, **caractérisée en ce que** l'unité d'affichage optique (11) est conçue de façon à ce que, pour le premier état de fonctionnement, un premier symbole (15) est affiché et pour le deuxième état de fonctionnement un deuxième symbole (16) est affiché, le premier symbole étant différent du deuxième symbole.

3. Fraiseuse routière selon la revendication 1 ou 2, **caractérisée en ce que** l'au moins une unité de commande (12) est disposée sur le poste de conduite (4).

4. Fraiseuse routière selon l'une des revendications 1 à 3, **caractérisée en ce que** l'unité de commande (12) comprend un élément de commande (20, 24) qui est conçu comme un élément de commande pour la détermination du premier et du deuxième état de fonctionnement.

5. Fraiseuse routière selon la revendication 4, **caractérisée en ce que** l'élément de commande est un bouton (20), l'unité de commande (12) étant conçue de façon à ce que, après l'actionnement du bouton, un des états de fonctionnement est affiché sur l'unité d'affichage optique (11) jusqu'à ce que le bouton soit actionné à nouveau, l'autre état de fonctionnement étant alors affiché.

6. Fraiseuse routière selon la revendication 4, **caractérisée en ce que** l'élément de commande est un commutateur (24) avec au moins deux positions de commutation à crans.

7. Fraiseuse routière selon l'une des revendications 1 à 6, **caractérisée en ce que** la fraiseuse routière comprend au moins un rétroviseur (17), disposé sur au moins un des deux côtés longitudinaux du châssis (2), pour le conducteur, le rétroviseur et l'unité d'affichage optique (11) constituant une unité.

8. Fraiseuse routière selon l'une des revendications 1 à 7, **caractérisée en ce que** l'unité d'affichage optique (11) comprend un émetteur de signaux acoustiques (27), qui est conçu de façon à ce qu'il émet un signal acoustique lors d'un changement de l'affichage d'un état de fonctionnement à l'autre.

9. Fraiseuse routière selon l'une des revendications 1 à 8, **caractérisée en ce que** l'unité d'affichage optique (11) est conçue de façon à ce que, pour le premier état de fonctionnement, un premier symbole (15) est affiché et pour le deuxième état de fonctionnement un deuxième symbole (16) est affiché, le premier symbole et le deuxième symbole étant représentés avec des couleurs différentes.
